# EUROPEAN PATENT SPECIFICATION

(11) **EP 4 601 872 B1**
(45) Date of publication and mention of the grant of the patent: **25.02.2026**
(21) Application number: 23789899.4
(22) Date of filing: 11.10.2023
(51) Int. Cl.: B32B 1/08, B32B 27/08, B32B 27/30, B32B 27/32, C08J 5/18, C08L 23/04, B32B 15/08, B32B 15/20, C08L 23/06

(54) **RECYCLABLE MULTILAYERED PACKAGING LAMINATE WITH BARRIER COATING**
WIEDERVERWERTBARES MEHRSCHICHTIGES VERPACKUNGSLAMINAT MIT SPERRBESCHICHTUNG
STRATIFIÉ D'EMBALLAGE MULTICOUCHE RECYCLABLE AVEC REVÊTEMENT BARRIÈRE

(30) Priority: 12.10.2022 IN 202221058423; 23.11.2022 EP 22209089
(43) Date of publication of application: 20.08.2025
(73) Proprietor: Unilever IP Holdings B.V., 6708 WH Wageningen (NL); Unilever Global IP Limited, Wirral, Merseyside CH62 4ZD (GB)
(72) Inventor: HANKARA, Anil, 6708 WH Wageningen (NL); ACHAREKAR, Saurabh, Vinod, 6708 WH Wageningen (NL)
(74) Representative: Tansley, Sally Elizabeth
(86) International application number: PCT/EP2023/078153
(87) International publication number: WO 2024/079175

(56) References cited:
- WO-A1-2017/151071
- WO-A1-2018/070945
- WO-A1-2021/079197
- WO-A1-2021/117052
- US-A1- 2021 308 995

## Description

### Field of the Invention

The present invention relates to laminates and collapsible tubes which are commonly used for packing home and personal care products, especially toothpastes.

### Background of the Invention

Collapsible tubes are generally made of laminates, i.e., materials that are multilayered in which the layers are joined to each other, e.g., by coextrusion or adhesive lamination. As laminates are often used for packaging a variety of products, certain features, and properties, especially barrier properties, have assumed importance.

EVOH (Ethylene vinyl alcohol) is often used to improve oxygen barrier properties of laminates based on polyethylene. EVOH enhances gas-barrier and helps retain flavours for longer. Alternatively, aluminium foil is also used widely to improve the barrier-property, particularly of lamitubes (tubes made from laminated films). Laminates containing Aluminium are often called Aluminium based laminates (ABL). Usually, a thin layer of about 5 to 12 µm of Al foil is sufficient. Usually, the ABL laminates are made of polyolefins, especially polyethylene, e.g., High Density Polyethylene (HDPE). Tubes of laminates containing aluminium are called ABL tubes. However, Aluminium based laminates generally cannot be recycled easily in PE recycle stream. Therefore, plastic based laminates (PBL) were invented.

ABL tubes are not yet phased out. In PBL tubes, EVOH is used instead of Aluminium to make them easily recyclable, whilst still having the desired barrier properties. In PBL tubes, the amount of EVOH is usually expressed as wt% of the multilayer laminate. Alternatively, it may be expressed in terms of % of the total thickness of the laminate.

Plastics are used in a wide variety of applications, such as packaging and consumer goods. Plastics are in high demand in these applications due to their relatively low production costs and good balance of properties.

To meet the increasing demand, millions of tons of plastics are produced globally. Majority of such synthetic plastics are produced from increasingly scarce fossil sources, such as petroleum and natural gas. Production of plastic from fossil sources contributes to raising the levels of greenhouse gases. The ubiquitous use of plastics has consequently resulted in millions of tons of plastic waste being generated every year. Most of the used plastics end in landfills, other as litter and still others end in water bodies.

WO21070197 A1 (Essel) discloses a multilayer film comprising a print layer, a tie layer, a second tie layer and a sealant layer. The multilayer film comprises 80 to 95 % HDPE and therefore it is recyclable in the HDPE stream.

WO21070198 A1 (Essel) discloses a lamitube made of a laminate in which the top layer comprises HDPE and MDPE. This combination is said to balance hardness with flexibility.

US10889093 B2 (Colgate) discloses a laminate in which the uppermost and lowermost layer have molecular orientation that results in a non-zero stress value for each layer. The multi-layer structure has a net stress value that is less than the greater stress value of the plurality of layers.

WO20098947 A1 (Constantia) discloses packaging laminate with a first laminate layer and a second laminate layer, the first laminate layer being a co-extruded and bidirectionally stretched composite of a cavitated substrate layer with 5 to 30% by weight, preferably 15 to 25 % By weight, cavitating agent and with a PE content of at least 60% by volume, a connection layer and a barrier layer made of a barrier polymer, preferably made of polyamide or ethylene-vinyl alcohol copolymer, with a maximum thickness of 20% of the total thickness of the first laminate layer, wherein the connecting layer is arranged between the substrate layer and the barrier layer and the first laminate layer is connected to the second laminate layer at its barrier layer.

WO19172932 A1 (Colgate) discloses a recyclable package, comprising:
an outer layer consisting essentially of a first high-density polyethylene (HDPE);
an inner layer comprising a second HDPE;
a barrier layer positioned between the outer layer and the inner layer;
a first bonding layer positioned between the outer layer and the barrier layer; and a second bonding layer positioned between the inner layer and the barrier layer.

EP3785895 A1 (Neopac, 2021) discloses a laminate for a tube package. The laminate has at least three layers, an inner polyolefin layer and an outer polyolefin layer and a barrier layer sandwiched between the outer polyolefin layer and the inner polyolefin layer. The barrier layer comprises at least one polyolefin comprising barrier foil like a monolayer foil or a coextruded foil or a laminate thereof and wherein at least 90 % of all polymers of the container are made of polyolefin of the same kind. An object of the invention is to provide a preferably gas-tight, and liquid-tight collapsible tube made of thermoplastic material that can be recycled in mono-material recycling streams without any separation step involved.

WO 2021/079197 A1 (Braskem), US 2021/0308995 A1 (Nair et al.), WO 2021/117052 A1 (Nair), WO 2017/151071 A1 (Kimpai Lamitube Co., Ltd.) and WO 2018/070945 A1 (Kimpai Lamitube Co., Ltd.) discloses various multilayered structures.

An object of the invention is to provide sustainable laminates for making tubes where the laminates can be made thinner but with superior technical functions. Another object is to provide laminates that are flexible but tough.

The present invention provides a sustainable laminate which enables the manufacture of opaque, translucent as well as transparent tubes having high OTR and WvTR. The present invention provides a laminate which is recyclable in HDPE recycling stream.

### Summary of the Invention

In accordance with a first aspect, disclosed is a multilayer laminated film comprising a top printable layer, a sealant layer at the bottom and an intermediate layer therebetween, where said
i) top printable layer is free of MDPE, and comprises HDPE and at least one of LDPE or LLDPE;
ii) said sealant layer comprises polyethylene wherein the polyethylene comprises HDPE; and,
iii) said intermediate layer is extrusion laminated to the printable layer and sealant layer and comprises a barrier coating sub-layer, wherein the intermediate layer is a multilayered structure comprising at least two sub-layers comprising HDPE and a barrier coating sub-layer, where the barrier coating sub-layer is sandwiched between the two sub-layers comprising HDPE.

### Detailed Description of the Invention

The term comprising is meant not to be limiting to any subsequently stated elements but rather to encompass non-specified elements of major or minor functional importance. In other words, the listed steps, elements, or options need not be exhaustive. Whenever the words "including" or "having" are used, these terms are meant to be equivalent to "comprising" as defined above. Except in the operating and comparative examples, or where otherwise explicitly indicated, all numbers in this description indicating amounts of material ought to be understood as modified by the word "about".

It should be noted that in specifying any range of concentration or amount, any upper concentration can be associated with any lower concentration or amount.

As used herein the term "flexible film" denotes a flexible sheet of polymer which has a thickness dimension which is substantially smaller in relation to its breadth and width and is used primarily for preparing a package for storing consumer goods which are in a solid, semi-solid and/or liquid form. The flexible film may be presented as a wound roll of material. Flexible film are usually used for preparing bags, sachets, pouches and other sealed package for holding consumer product.

As used herein the term "laminate" refers to layers of film bonded together, in this case a multilayer laminate. The bonding may be achieved by extrusion, heat treatment, adhesives or other method known in the art to laminate two films or sheet.

As used herein, top printable layer refers to the layer farthest away from a product, such as toothpaste, when packaged in a packaging, e.g., tube, made from the multilayer laminated film.

As used herein, sealant layer refers to the layer located closest or proximal to the product when packaged with a packaging, e.g., tube, made from the multilayer laminated film.

As used herein "intermediate layer" refers to the layer located between the printable and sealant layers, such that one side of the intermediate layer faces the sealant layer and the other side (back or opposite side) of the intermediate layer faces the top printable layer.

"Extrusion laminated and grammatical variations thereof" means gradual melting of the thermoplastic resin that is used as adhesive and which is fed into an extruder in granular or powder form until it becomes fluid. The molten resin is cast through a die between the plastic films and run over cylinders where the extrudate is cooled and solidified. It is preferred that the cylinders are chilled to accelerate the cooling process and avoid shrinkage, holes or melting.

The term "high density polyethylene" HDPE, means polyethylene whose density is 0.941 gm/cm³ to 0.970 gm/cm³.

The term "medium density polyethylene", MDPE, means polyethylene whose density is 0.926 gm/cm³ to 0.941 gm/cm³.

The term "low density polyethylene", LDPE, means polyethylene whose density is 0.919 gm/cm³ to 0.935 gm/cm³. The term "linear low density polyethylene" means polyethylene whose density is 0.919 gm/cm³ to 0.925 gm/cm³.

The term "stiffness" refers to resistance of a material to deformation under an applied force. The term "Young's modulus" used herein refers to the property of a material that is calculated by measuring the ratio of stress to strain incurred in the material. Young's modulus gives a measure of the stiffness of the material or the ease with which it can be stretched or bent. Higher the value of the young's modulus, lesser is the extent to which a material can be stretched or elongated, higher is the stiffness. It is measured in terms of N/m² or Pascal (Pa). The term "melt flow index" or "MFI" used refers to the grams of a polymer flowing per 10 minutes through a capillary tube. It is a measure of the ease of flowing of the polymer melt denoted in terms of g/10 minutes.

The term "polyolefin(s)", as used herein, encompasses a class of thermoplastic polymers that are widely used in the consumer and petrochemicals industry and refers to a polymer that comprises, in polymerized form, a majority amount of olefin monomer, for example ethylene or propylene (based on the weight of the polymer), and optionally may comprise one or more comonomers. Polyolefins are typically produced from a simple olefin (also called an alkene with the general formula (CₙH₂ₙ) as a monomer. For example, polyethylene (PE) is the polyolefin produced by polymerizing the olefin ethylene (C₂H₄). Polypropylene (PP) is another common polyolefin which is made from the olefin propylene (C₃H₆).

Polyethylene" or "ethylene-based polymer" mean polymers comprising greater than 50% by weight of units which have been derived from ethylene monomer. This includes polyethylene homopolymers or copolymers (meaning units derived from two or more comonomers). It is preferred that polyethylene means Low Density Polyethylene (LDPE); Linear Low-Density Polyethylene (LLDPE); Medium Density Polyethylene (MDPE); or High Density Polyethylene (HDPE). More preferably polyethylene means at least one of Low Density Polyethylene (LDPE); Medium Density Polyethylene (MDPE); or High Density Polyethylene (HDPE).

Preferably, the melt index (h) of polyethylene is 50g/10 minutes or less, preferably 20 g/10 minutes or less where the Melt index is measured at the conditions of 190°C and a standard weight of 2.16 Kg. The polyethylene has a melt index (h) of up to 15 g/10 minutes in some embodiments. The polyethylene has a melt index (h) of up to 10 g/10 minutes in some embodiments. In some embodiments, the polyethylene has a melt index (h) less than 5 g/10 minutes.

Various commercially available polyethylene includes LDPE such as DOWLEX^{™} linear low-density polyethylene commercially available from The Dow Chemical Company, such as DOWLEX^{™} 2038.68G. Examples of commercially available HDPE that can be used in embodiments of the present invention include DOW^{™} HDPE resins and DOWLEX^{™}. Any other suitable commercially available polyethylene may be selected for use in polymer composition based on the teachings herein.

LDPE is readily available, e. g., PE 1017 (MI=7; d=0.917) from Chevron, San Francisco, California, SLP 9045 (MI=7.5; d=0.908) from Exxon, Houston, Texas, and ZCE 200 (MI=3; d=0.918) from Mobil Chemical Corporation, Fairfax, Virginia. The term LLDPE means a copolymer of ethylene and a minor amount of an olefin containing 4 to 10 carbon atoms, having density of from about 0.910 to about 0.926 g/cm³ and MI from 0.5 to about 10 g/10 minute. LLDPE is readily available, e.g., DOWLEX^{®} 2045.03 (MI=1.1 ; d=0.920) from Dow Chemical Company, Midland, Michigan.

MDPE is readily available, e. g., DOWLEX^{®} 2027A from The Dow Chemical Company, and Nova 74B and Nova 14G from Nova Corporation, Sarnia, Ontario, Canada.

It is preferred that water vapor transmission rate (WvTR) of the multilayer laminated film at 37.8°C and 90% RH is 0.1 to 1 g/mm²/day, preferably from 0.25 to 1 g/mm²/day, more preferably from 0.55 to 1 g/mm²/day. The WvTR was measured using ASTM F 1249 method.

Preferably the oxygen transmission rate (OTR) of the multilayer laminated film at 37.8°C and 90% RH is 0.1 to 1 cm³/m²/day/1atm, also preferably from 0.25 to 1 cm³/m²/day/1atm, still more preferably from 0.25 to 0.8 cm³/m²/day/1atm, further preferably from 0.25 to 0.6 cm³/m²/day/1atm . The OTR was measured using ASTM D 3985 method.

### The printable polyethylene layer

It is preferred that the top printable layer comprises HDPE and at least one of LDPE or LLDPE. The top printable layer is free of MDPE, meaning thereby that the top printable layer comprises less than 3% MDPE. It is preferred that the top printable layer comprises HDPE and at least one of LDPE or LLDPE, where HDPE content in the layer 10 to 60% by wt %. It is particularly preferred that the top printable layer comprises LDPE and LLDPE. In such a case it is preferred that the top layer comprises 40 to 80 wt% LDPE and 10 to 30 wt% LLDPE. Processing agents and masterbatch may also be added and usually are comprised in said top printable layer.

It is further preferred that thickness of the top printable layer accounts for 10 to 35 wt% of total thickness of said laminate.

It is yet further preferred that the top printable layer, in turn, comprises sub-layer of HDPE and at least one of LDPE or LLDPE. It is further preferred that the top printable layer comprises a sub-layer of HDPE, a sub-layer of LDPE and a sub-layer of LLDPE.

Alternately, it is preferred that the top printable layer has a structure which preferably comprises at least 3 sub-layers. Preferably a top sub-layer comprising HDPE, still preferably a top-sub layer HDPE and at least one of LLDPE and LDPE, preferably the top sub-layer comprises HDPE and LLDPE. Also preferably a top sub-layer comprising LLDPE or LDPE, preferably LLDPE. The top printable layer, when comprising at least a 3-layered structure may include a middle sub-layer comprising HDPE, preferably HDPE and at least one of LLDPE or LDPE, preferably LLDPE. Preferably an inner sub-layer comprising LLDPE or LDPE, preferably LLDPE.

Preferably the thickness of the top printable layer ranges from 5 µm to 105 µm, preferably from 7 µm to 100 µm. Preferably the thickness is at least 15 µm, still preferably at least 17 µm, further preferably at least 25 µm, still more preferably at least 30 µm, but preferably the thickness is not more than 95 µm, still preferably not more than 80 µm and still further preferably not more than 70 µm.

### The sealant layer

It is preferred that the sealant layer at the bottom of the laminate comprises HDPE, preferably the sealant layer comprises HDPE and at least one of MDPE, LDPE or both. Preferably the sealant layer comprises HDPE and at least one of MDPE and LDPE. It is preferred that the sealant layer comprises sub-layers of HDPE where sub-layers comprises HDPE and at least one of MDPE and LDPE.

Preferably the sealant layer comprises HDPE and at least one of MDPE, LDPE, or LLDPE. Preferably the sealant layer comprises HDPE and at least one of MDPE and LLDPE. More preferably the LLDPE is a metallocene LLDPE.

It is preferred that the thickness of the sealant layer accounts for 10 wt.% to 35 wt.% of the total thickness of said laminate.

Preferably the sealant layer is a 3 layered structure. Preferably the sealant layer has a structure comprising a first sub-layer comprising MDPE. Preferably a middle sub-layer comprising HDPE, preferably HDPE and MDPE and an innermost sub-layer comprising LLDPE and MDPE. The term innermost refers to the sub-layer of the sealant layer which is proximal to the product when packaged with a packaging, e.g., tube, made from the multilayer laminated film.

Preferably the thickness of the sealant layer ranges from 5 µm to 105 µm, preferably from 7 µm to 100 µm. Preferably the thickness is at least 15 µm, still preferably at least 17 µm, further preferably at least 25 µm, still more preferably at least 30 µm, but preferably the thickness is not more than 95 µm, still preferably not more than 80 µm and still further preferably not more than 70 µm.

### The intermediate layer

It is preferred that water vapour transmission rate (WvTR) of the intermediate layer at 37.8°C and 90% RH is 0.1 to 1 g/mm²/day, preferably from 0.1 to 0.8 g/mm²/day, more preferably from 0.1 to 0.55 g/mm²/day. The WvTR was measured using ASTM F 1249 method. The WvTR was measured using ASTM F 1249 method.

Preferably the oxygen transmission rate (OTR) of the intermediate layer at 37.8°C and 90% RH is 0.1 to 1 cm³/m²/day/1atm, also preferably from 0.25 to 1 cm³/m²/day/1atm, still more preferably from 0.1 to 0.8 cm³/m²/day/1atm, further preferably from 0.1 to 0.5 cm³/m²/day/1atm . The OTR was measured using ASTM D 3985 method.

It is preferred that the thickness of the intermediate layer accounts for 20 to 60 wt% of total thickness of said laminate.

Preferably the intermediate layer comprises HDPE. More preferably the intermediate layer comprises HDPE and at least one of MDPE and LDPE, more preferably HDPE and at least MDPE, also preferably HDPE and both MDPE and LDPE. Preferably the intermediate layer is free of LLDPE. Preferably the intermediate layer comprises from 50 wt.% to 100 wt.% HDPE and up to 50 wt.% of at least one of MDPE and LDPE or both MDPE and LDPE.

Preferably the intermediate layer includes at least 3 sub-layers, More, preferably the intermediate layer includes 3,5 or 7 sub-layers. Preferably in the intermediate layer the barrier coating is sandwiched between the sub-layers, preferably sandwiched between at least two sub-layers. Preferably the intermediate layer comprises at least two sub-layers comprising HDPE and a sub-layer of barrier coating, where the barrier coating sub-layer is sandwiched between the two sub-layers comprising HDPE. More preferably the barrier coating is sandwiched between sub-layers comprising HDPE and at least one of MDPE and LDPE, more preferably at least MDPE, also preferably both MDPE and LDPE. More preferably the barrier coating is sandwiched between two sub-layers comprising HDPE, and two further sub-layers comprising at least one of MDPE and LDPE, more preferably at least MDPE, also preferably both MDPE and LDPE where the further sub-layers are on both sides of the HDPE sub-layers. Preferably the intermediate layer is free of LLDPE.

Preferably when the intermediate layer includes 3 sub-layers, it comprises a primary lamination layer, a middle layer with barrier properties and a secondary lamination layer. Preferably the lamination layers comprises HDPE or MDPE.

Preferably when the multilayer laminated film is a metallized structure, the primary lamination layer is metallized.

It is further preferred that the intermediate layer is a 3 to 7-layered structure. Preferably the intermediate layer has sub-layers comprising a primary lamination sub-layer, a first tie sub-layer, a middle sub-layer with barrier properties, a second tie sub-layer and a secondary lamination layer.

Preferably when the multilayer laminated film is a metallized structure the intermediate layer is preferably a 5-layered structure consisting of, in sequence, a primary layer having barrier properties, a first tie sub-layer, a middle sub-layer, a second tie sub-layer and a secondary lamination sub-layer. The primary lamination sub-layer may be metallised.

Preferably when the intermediate layer is a 7-layered structure it consisting of, in sequence, a primary lamination sub-layer, a first sub-layer, a first tie sub-layer, a middle barrier coating sub-layer, a second tie sub-layer, a second sub-layer, a secondary lamination layer. Preferably when the intermediate layer is metallized, preferably the primary lamination layer is metallized. Preferably the thickness of the metallization is less than 7 µm, still preferably less than 5 µm.

Preferably the barrier coating or sub-film accounts for 0.0001 to 30 % of total thickness of said intermediate layer. It is preferred that the barrier coating comprises Ethylene-vinyl alcohol copolymer or aluminium foil or a combination of vinyl alcohol copolymer and aluminium foil. Preferably the barrier coating comprises ethylene-vinyl alcohol copolymer. When present the aluminium foil is preferably present as a metallization on the primary lamination layer. Further preferably the thickness of said barrier coating accounts for 1% to 5 %, still preferably from 1 % to 3 % of total thickness of said laminate. Before applying any coating, the surface of the polyolefin film may be treated to increase its surface energy. This may be done by any of several known and conventional techniques.

It is particularly preferred that the film comprises a first lamination layer between the top printable polyethylene layer and the intermediate layer, and a second lamination layer between the sealant polyethylene layer and the intermediate layer. When present, it is preferred that thickness of each lamination layer ranges from 10 µm to 30 µm. It is preferred that thickness of the printable polyethylene layer and of the sealant polyethylene layer is 80 µm to 150 µm. Preferably the first lamination layer comprises from 50 wt.% to 100 wt.% LDPE, more preferably the 80 wt.% to 100 wt.% LDPE, still preferably 100 wt.% LDPE. Preferably the first lamination layer comprises LDPE and ethylene acrylic acetate (EAA). Preferably the second lamination layer comprises from 50 wt.% to 100 wt.% LDPE, more preferably the 80 wt.% to 100 wt.% LDPE, still preferably 100 wt.% LDPE. Preferably the top printable layer, a sealant layer at the bottom and an intermediate layer present in the multilayer laminated film are extrusion laminated.

It is preferred that total thickness of the laminate ranges from 175 µm to 350 µm

Preferably the tie sub-layer comprises modified polyolefin. Preferably the modified polyolefins are based on ethylene polymer or propylene polymers. Preferably the tie sub-layer comprises modified polyolefins selected from the group consisting of maleated polyethylene, ethylene-acrylic acid copolymer, ethylene-meth acrylic acid copolymer, anhydride grafted ethylene/1-butene copolymer, anhydride grafted ethylene/1-hexene copolymer, polyethylene vinyl acetate copolymer, ethylene methyl acrylate copolymer, anhydride grafted ethylene/1-octene copolymer maleated polyethylene and maleic anhydride grafted polyethylene. Preferably the sub-layer comprises those selected from maleated polyethylene and polyethylene grafted maleic anhydride, still preferably polyethylene grafted maleic anhydride.

Preferably the multilayered laminated film according to the first aspect of the present invention are plastic based laminates (PBL) and is free of aluminium layer. By aluminium layer is meant that the plastic based multilayered laminated film according to the invention is devoid of a layer of aluminium with a thickness of 7 micrometers or more, more preferably from 7 micrometers to 12 micrometers.

The multilayered laminated film may include suitable additives, for example stabilizers, neutralizers, lubricants, or antioxidants. In principle, additives used for polyolefins, such as polyethylene or polypropylene, are also suitable for cycloolefin polymer films. Examples of UV stabilizers which can be used are absorbers, such as hydroxyphenyl benzotriazoles, hydroxy benzophenones, formamidine or benzylidene camphor; quenchers, such as cinnamic esters or nickel chelates; free- radical scavengers, such as sterically hindered phenols, hydroperoxide scavengers, such as nickel or zinc complexes of sulfur-containing compounds, or light stabilizers and mixtures thereof. Examples of suitable lubricants include fatty acids and esters, amides and salts thereof; silicones or waxes, such as polypropylene or polyethylene waxes. Examples of antioxidants which can be added are free-radical scavengers, such as substituted phenols and aromatic amines, and/or peroxide scavengers, such as phosphites, phosphates and thio compounds.

### Package and use

According to yet another aspect of the present invention provided is an article comprising the multilayered laminated film according to the first aspect or obtainable from the process of the second aspect.

The invention also relates to a lamitube comprising a cylindrical body, a shoulder, and a cap, wherein said body is made of a multilayered laminated film of the first aspect of the invention. It is preferred that ovality of the body is in the range of 1 to 10%. The cap could also be optional as it is a separate article that can be made by a standard industrial process.

The film may be used as such for any suitable packaging application, preferably lamitubes.

However, it is preferred that the film is used to make laminates, which in turn are used to make, preferably, squeezable tubes. Several processes of making lamitubes are well known in the art.

When the intended application is to make collapsible tubes, the outer and inner films should be capable of being lap-sealed (also called side seam), preferably by application of heat, so that the sides may be sealed off after a product has been filled. In such cases, the innermost film should also bond with itself, so that the bottom of the tube may be closed after a product has been filled.

The lamitube comprises a body for storing a packaged product, and shoulder which comprises an outlet for dispensing the packaged product, and a cap or closing off the tube.

The body may at the outside be provided with a print, which is mostly applied previously.

In a usual process for manufacturing the tubes, the body and the shoulder are manufactured separately or can be manufactured inline, and subsequently welded together. The caps for the tubes are usually manufactured separately.

Upon manufacturing the tube body, the multilayer laminate is introduced into a device that is provided with a preform with the shape of body and is provided with expansion hubs for the expansion of the film to the desired dimensions. A guiding ensures that rims of the multilayer laminate overlap. The rims are welded together by means of a fully continuous heat welding system.

The laminate is cut to size by means of a rotating knife, thus obtaining tubes of the desired length. The obtained tubes are put on a compression mandrel.

The upper part of the tube, or tube shoulder is pressed in the right shape and desired dimensions in a separate press and provided with a small quantity of molten multilayer packaging film. The compression mandrels provided with the tube body are introduced into the press in which the shoulder is pressed and welded to the shoulder. The press is cooled, the tubes are removed from the press, and transferred to another device in which each tube is provided with a cap. Devices to manufacture such tubes are available from a variety of suppliers, example AISA. The tubes are brought to a filling device and filled with the desired cosmetic product through the bottom which subsequently is heat sealed.

According to another aspect of the present invention provided is a use of the multilayer laminated film for manufacturing a lamitube for providing recyclable packaging material.

According to yet another aspect of the present invention provided is a use of the multilayer laminated film for providing eco-friendly packaging material.

Preferably the multilayer laminated film according to the invention is at least 16% lighter than conventional packaging material and preferably the multilayer laminated film makes lower usage of plastic.

The invention will now be described with the help of non-limiting exemplary embodiments.

### Examples

Structures of some multilayer laminated films of the invention are described below.

### Example 1:

Top printed layer (LDPE/HDPE/LLDPE) 70 µm/first lamination layer 20 µm LDPE/Intermediate layer 60 µm EVOH-PE/Second lamination layer 20 µm/ sealant PE (MDPE/HDPE/LDPE) 50 µm.

### Example 2:

Multilayer (1-5 layers) Top printed layer (LDPE/HDPE/LLDPE) 40 µm/first lamination layer 20 µm LDPE/Intermediate Multilayer (1-7 Layers) 50µm EVOH-PE/Second lamination layer 20 µm/ Multilayer (1-5 layers) Sealant PE (MDPE/HDPE/LDPE) 50 µm.

### Example 3 (not according to the invention)

Multilayer (1-5 layers) Top printed PE (LDPE/HDPE/LLDPE) 60 µm/first lamination layer 20 µm LDPE/ Heat Sealable Barrier layer (1-11 Layers) 100µm EVOH-PE Exemplary details of the top printed layer are as follows:
Layer-1 20 µm LLDPE/Layer-2 20 µm HDPE/Layer-3 barrier layer 20 µm HDPE/Layer-4 20 µm HDPE/Layer-5 20 µm LLDPE
Alternative exemplary details of a printable polyethylene layer are as follows:
   Layer -1 17 µm (LDPE-LLDPE-HDPE)/ Layer-2 36 µm (HDPE-LLDPE)/ Layer-3 17 µm (LLDPE-HDPE)

Exemplary details of the sealant polyethylene layer are:
Layer -1 12 µm (LDPE-MDPE)/ Layer -2 26 µm (HDPE-MDPE)/ Layer-3 12 µm (LDPE-MDPE)

## Claims

1. A multilayer laminated film comprising a top printable layer, a sealant layer at the bottom and an intermediate layer therebetween, where said:
i) top printable layer is free of MDPE, and comprises HDPE and at least one of LDPE or LLDPE;
ii) said sealant layer comprises polyethylene wherein the polyethylene comprises HDPE; and,
iii) said intermediate layer is extrusion laminated to the printable layer and sealant layer and comprises a barrier coating sub-layer,
wherein the intermediate layer is a multilayered structure comprising at least two sub-layers comprising HDPE and a barrier coating sub-layer, where the barrier coating sub-layer is sandwiched between the two sub-layers comprising HDPE.

2. A multilayer laminated film as claimed in claim 1 wherein said top printable layer comprises HDPE and at least one of LDPE or LLDPE, where HDPE content in said layer is 10 to 60 wt%.

3. A multilayer laminated film as claimed in claim 1 or 2 wherein said top printable layer comprises LDPE and LLDPE.

4. A multilayer laminated film as claimed in claim 3 wherein said top layer comprises 40 wt.% to 80 wt.% LDPE and 10 wt.% to 30 wt.% LLDPE.

5. A multilayer laminated film as claimed in any of claims 1 to 4 wherein thickness of said top printable layer accounts for 10 wt.% to 35 wt.% of total thickness of said laminate.

6. A multilayer laminated film as claimed in any of claims 1 to 5 wherein thickness of said sealant layer accounts for 10 wt.% to 35 wt.% of total thickness of said laminate.

7. A multilayer laminated film as claimed in any of claims 1 to 6 wherein thickness of said intermediate layer accounts for 20 wt.% to 60 wt.% of total thickness of said laminate.

8. A multilayer film as claimed in any one of the preceding claims wherein the sealant layer comprises HDPE and at least one of LDPE, LLDPE or MDPE, more preferably the sealant layer comprises HDPE, LLDPE and MDPE or HDPE, LDPE and MDPE.

9. A multilayer film as claimed in any one of the preceding claims wherein the intermediate layer comprises HDPE and at least one of MDPE or LDPE, more preferably HDPE and MDPE, still preferably HDPE, MDPE and LDPE.

10. A multilayer laminated film as claimed in any of claims 1 to 9 wherein WvTR (ASTM F 1249) of said intermediate layer at 37.8°C and 90% RH is 0.1 to 1 g/mm²/day, preferably 0.25 to 1 g/mm²/day, still preferably 0.55 to 1 g/mm²/day.

11. A multilayer laminated film as claimed in any of claims 1 to 10 wherein OTR (ASTM D 3985) of said intermediate layer at 37.8°C and 90% RH is 0.1 to 1 cm³/m²/day/1atm, preferably 0.25 to 1 cm³/m²/day/1atm, still preferably 0.25 to 0.8 cm³/m²/day/1atm.

12. A multilayer film as claimed in any of claims 1 to 11 wherein total thickness of said laminate is 175 to 350 µm.

13. A lamitube comprising a cylindrical body, a shoulder, and a cap, wherein said body is made of a multilayer laminated film as claimed in any of claims 1 to 12.

## Patentansprüche

1. Mehrschichtige laminierte Folie, umfassend eine bedruckbare Oberschicht, eine Dichtungsschicht an der Unterseite und eine Zwischenschicht dazwischen, wobei
i) die bedruckbare Oberschicht frei von MDPE ist und HDPE und mindestens eines von LDPE oder LLDPE umfasst;
ii) die Dichtungsschicht Polyethylen umfasst, wobei das Polyethylen HDPE umfasst; und
iii) die Zwischenschicht durch Extrusion auf die bedruckbare Schicht und die Dichtungsschicht laminiert ist und eine Barrierebeschichtungs-Unterschicht umfasst,
wobei die Zwischenschicht eine mehrschichtige Struktur aufweist, die mindestens zwei Unterschichten umfasst, die HDPE und eine Barrierebeschichtungs-Unterschicht umfassen,
wobei die Barrierebeschichtungs-Unterschicht zwischen den zwei Unterschichten, die HDPE umfassen, angeordnet ist.

2. Mehrschichtige laminierte Folie nach Anspruch 1, wobei die bedruckbare Oberschicht HDPE und mindestens eines von LDPE oder LLDPE umfasst, wobei der HDPE-Gehalt in dieser Schicht 10 bis 60 Gew.-% beträgt.

3. Mehrschichtige laminierte Folie nach Anspruch 1 oder 2, wobei die bedruckbare Oberschicht LDPE und LLDPE umfasst.

4. Mehrschichtige laminierte Folie nach Anspruch 3, wobei die Oberschicht 40 Gew.-% bis 80 Gew.-% LDPE und 10 Gew.-% bis 30 Gew.-% LLDPE umfasst.

5. Mehrschichtige laminierte Folie nach einem der Ansprüche 1 bis 4, wobei die Dicke der bedruckbaren Oberschicht 10 Gew.-% bis 35 Gew.-% der Gesamtdicke des Laminats ausmacht.

6. Mehrschichtige laminierte Folie nach einem der Ansprüche 1 bis 5, wobei die Dicke der Dichtungsschicht 10 Gew.-% bis 35 Gew.-% der Gesamtdicke des Laminats ausmacht.

7. Mehrschichtige laminierte Folie nach einem der Ansprüche 1 bis 6, wobei die Dicke der Zwischenschicht 20 Gew.-% bis 60 Gew.-% der Gesamtdicke des Laminats ausmacht.

8. Mehrschichtige Folie nach einem der vorhergehenden Ansprüche, wobei die Dichtungsschicht HDPE umfasst und mindestens eine Verbindung aus LDPE, LLDPE oder MDPE umfasst, wobei die Dichtungsschicht vorzugsweise HDPE, LLDPE und MDPE oder HDPE, LDPE und MDPE umfasst.

9. Mehrschichtige Folie nach einem der vorhergehenden Ansprüche, wobei die Zwischenschicht HDPE und mindestens eine Verbindung aus MDPE oder LDPE, bevorzugter HDPE und MDPE, noch immer bevorzugt HDPE, MDPE und LDPE umfasst.

10. Mehrschichtige laminierte Folie nach einem der Ansprüche 1 bis 9, wobei WvTR (ASTMF 1249) der Zwischenschicht bei 37,8°C und 90% relativer Luftfeuchtigkeit 0,1 bis 1 g/mm²/Tag, vorzugsweise 0,25 bis 1 g/mm²/Tag, noch immer bevorzugt 0,55 bis 1 g/mm²/Tag beträgt.

11. Mehrschichtige laminierte Folie nach einem der Ansprüche 1 bis 10, wobei OTR (ASTM D 3985) der Zwischenschicht bei 37,8°C und 90% relativer Luftfeuchtigkeit 0,1 bis 1 cm³/m²/Tag/1 atm, vorzugsweise 0,25 bis 1 cm³/m²/Tag/1 atm, noch immer bevorzugt 0,25 bis 0,8 cm³/m²/Tag/1 atm beträgt.

12. Mehrschichtige Folie nach einem der Ansprüche 1 bis 11, wobei die Gesamtdicke des Laminats 175 bis 350 µm beträgt.

13. Laminierte Tube, umfassend einen zylindrischen Körper, eine Schulter und eine Kappe, wobei der Körper aus einer mehrschichtigen laminierten Folie, wie in einem der Ansprüche 1 bis 12 beansprucht, hergestellt ist.

## Revendications

1. Film stratifié multicouche comprenant une couche imprimable supérieure, une couche d'étanchéité au fond et une couche intermédiaire entre elles, dans lequel :
i) ladite couche imprimable supérieure est exempte de MDPE, et comprend du HDPE et au moins l'un parmi le LDPE et le LLDPE ;
ii) ladite couche d'étanchéité comprend du polyéthylène, lequel polyéthylène comprend du HDPE ; et
iii) ladite couche intermédiaire est stratifiée par extrusion à la couche imprimable et à la couche d'étanchéité et comprend une sous-couche de revêtement barrière,
dans lequel la couche intermédiaire est une structure multicouche comprenant au moins deux sous-couches comprenant du HDPE et une sous-couche de revêtement barrière, où la sous-couche de revêtement barrière est prise en sandwich entre les deux sous-couches comprenant du HDPE.

2. Film stratifié multicouche selon la revendication 1, dans lequel ladite couche imprimable supérieure comprend du HDPE et au moins l'un parmi le LDPE et LLDPE, où la teneur en HDPE de ladite couche est de 10 à 60 % en poids.

3. Film stratifié multicouche selon la revendication 1 ou 2, dans lequel ladite couche imprimable supérieure comprend du LDPE et du LLDPE.

4. Film stratifié multicouche selon la revendication 3, dans lequel ladite couche supérieure comprend 40 % en poids à 80 % en poids de LDPE et 10 % en poids à 30 % en poids de LLDPE.

5. Film stratifié multicouche selon l'une quelconque des revendications 1 à 4, dans lequel l'épaisseur de ladite couche imprimable supérieure représente 10 % en poids à 35 % en poids de l'épaisseur totale dudit stratifié.

6. Film stratifié multicouche selon l'une quelconque des revendications 1 à 5, dans lequel l'épaisseur de ladite couche d'étanchéité représente 10 % en poids à 35 % en poids de l'épaisseur totale dudit stratifié.

7. Film stratifié multicouche selon l'une quelconque des revendications 1 à 6, dans lequel l'épaisseur de ladite couche intermédiaire représente 20 % en poids à 60 % en poids de l'épaisseur totale dudit stratifié.

8. Film stratifié multicouche selon l'une quelconque des revendications précédentes, dans lequel la couche d'étanchéité comprend du HDPE et au moins l'un parmi le LDPE, le LLDPE et le MDPE, mieux encore la couche d'étanchéité comprend du HDPE, du LLDPE et du MDPE, ou du HDPE, du LDPE et du MDPE.

9. Film stratifié multicouche selon l'une quelconque des revendications précédentes, dans lequel la couche intermédiaire comprend du HDPE et au moins l'un parmi le MDPE et le LDPE, mieux encore du HDPE et du MDPE, plus particulièrement du HDPE, du MDPE et du LDPE.

10. Film stratifié multicouche selon l'une quelconque des revendications 1 à 9, dans lequel le WvTR (ASTM F 1249) de ladite couche intermédiaire à 37,8°C et sous 90 % HR est de 0,1 à 1 g/mm²/jour, de préférence de 0,25 à 1 g/mm²/jour, mieux encore de 0,55 à 1 g/mm²/jour.

11. Film stratifié multicouche selon l'une quelconque des revendications 1 à 10, dans lequel l'OTR (ASTM D 3985) de ladite couche intermédiaire à 37,8°C et sous 90 % HR est de 0,1 à 1 cm³/m²/jour/1 atm, de préférence de 0,25 à 1 cm³/m²/jour/1 atm, plus particulièrement de 0,25 à 0,8 cm³/m²/jour/1 atm.

12. Film multicouche selon l'une quelconque des revendications 1 à 11, dans lequel l'épaisseur totale dudit stratifié est de 175 à 350 µm.

13. Tube stratifié multicouche comprenant un corps cylindrique, un épaulement, et un bouchon, dans lequel ledit corps est fait d'un film stratifié multicouche de l'une quelconque des revendications 1 à 12.
